# EUROPÄISCHE PATENTSCHRIFT

(11) **EP 0 878 393 B1**
(45) Veröffentlichungstag und Bekanntmachung des Hinweises auf die Patenterteilung: **09.04.2003**
(21) Anmeldenummer: 98107503.9
(22) Anmeldetag: 24.04.1998
(51) Int. Cl.: B64C 23/06, B64C 9/24

(54) **Einrichtung zur Beeinflussung einer Wurzelströmung**
Device for influencing the air-flow over the wing root
Dispositif pour influencer l'écoulement d'air autour de l'emplanture d'aile

(30) Priorität: 13.05.1997 DE 19719922
(43) Veröffentlichungstag der Anmeldung: 18.11.1998
(73) Patentinhaber: Airbus Deutschland GmbH, 21129 Hamburg (DE)
(72) Erfinder: Flaig, Axel, Dipl.-Ing., 27367 Reessum (DE); Schwetzler, Detlev, Ing., 27755 Delmenhorst (DE)
(74) Vertreter: Hansmann, Dierk, Dipl.-Ing.

(56) Entgegenhaltungen:
- DE-A- 2 149 030
- US-A- 4 519 560
- US-A- 4 739 957
- US-A- 5 056 741
- US-A- 5 282 591
- US-A- 5 294 080

## Beschreibung

Die Erfindung bezieht sich auf eine Einrichtung zur Beeinflussung einer Wurzelströmung an einem Flugzeug mit einem Hochauftriebssytem.

Hochauftriebssysteme werden benötigt, um bei Transportflugzeugen möglichst niedrige Start- und Landegeschwindigkeiten zu erreichen. Derartige Hochauftriebssysteme liefern den im Langsamflug erforderlichen hohen Auftrieb. Ein entsprechendes System besteht in der Regel aus Vorflügeln und Landeklappen, die am Hauptflügel des Flugzeuges angebracht sind. Dabei sind im allgemeinen besondere Maßnahmen erforderlich, um auch im Bereich des Flügel/Rumpf-Überganges, also an der Flügelwurzel, auf der Oberseite des Flügels eine ungestörte anliegende Wurzelströmung sicherzustellen. Hierzu werden üblicherweise zusätzliche lokale Hilfsklappen, beispielsweise Kruegerklappen, verwendet.

Demgemäß liegt der Erfindung die Aufgabe zugrunde, eine gattungsgemäße Einrichtung derart auszubilden, daß damit eine positive Beeinflussung der Wurzelströmung ohne Anwendung zusätzlicher Klappen erreicht wird.

Diese Aufgabe wird bei einer gattungsgemäßen Einrichtung dadurch gelöst, daß an den jeweiligen rumpfnahen Enden der Vorflügel je ein Wirbelgenerator angeordnet ist und die rumpfseitigen Trennstellen zu den Vorflügeln jeweils eine Übergangsverkleidung aufweisen.

Dabei ist insbesondere von Vorteil, daß die erfindungsgemäße Einrichtung keine zusätzlichen beweglichen Klappen erfordert, was im Vergleich mit bisherigen Lösungen ein niedrigeres Baugewicht und einen niedrigeren Wartungsaufwand zur Folge hat. Außerdem ist die erfindungsgemäße Einrichtung infolge ihrer Einfachheit leicht nachrüstbar.

Vorteilhafte Weiterbildungen der Erfindung sind in den Unteransprüchen angegeben.

Die Erfindung ist anhand der Zeichnung dargestellt und nachfolgend näher erläutert. Es zeigen
- Fig. 1: einen Flügel/Rumpf-Übergang mit einem Vorflügel,
- Fig. 2: die Einzelheit II nach Fig.1,
- Fig. 3: den Vorflügel nach Fig.2 in ausgefahrenem Zustand mit einer Übergangsverkleidung,
- Fig. 4: einen Vorflügel mit einem Wirbelgenerator,
- Fig. 5: die Ansicht V nach Fig.4,
- Fig. 6: die Ansicht VI nach Fig.4,
- Fig. 7: einen Vorflügel mit einer Endscheibe,
- Fig. 8: die Ansicht VIII nach Fig.7,
- Fig. 9: die Ansicht IX nach Fig.7,
- Fig.10: einen Vorflügel mit einem Zusatzflügel,
- Fig.11: die Ansicht XI nach Fig.10,
- Fig.12: die Ansicht XII nach Fig.10,
- Fig.13: einen Flügel/Rumpf-Übergang mit einem Wirbel und
- Fig.14: eine weitere Übergangsverkleidung.

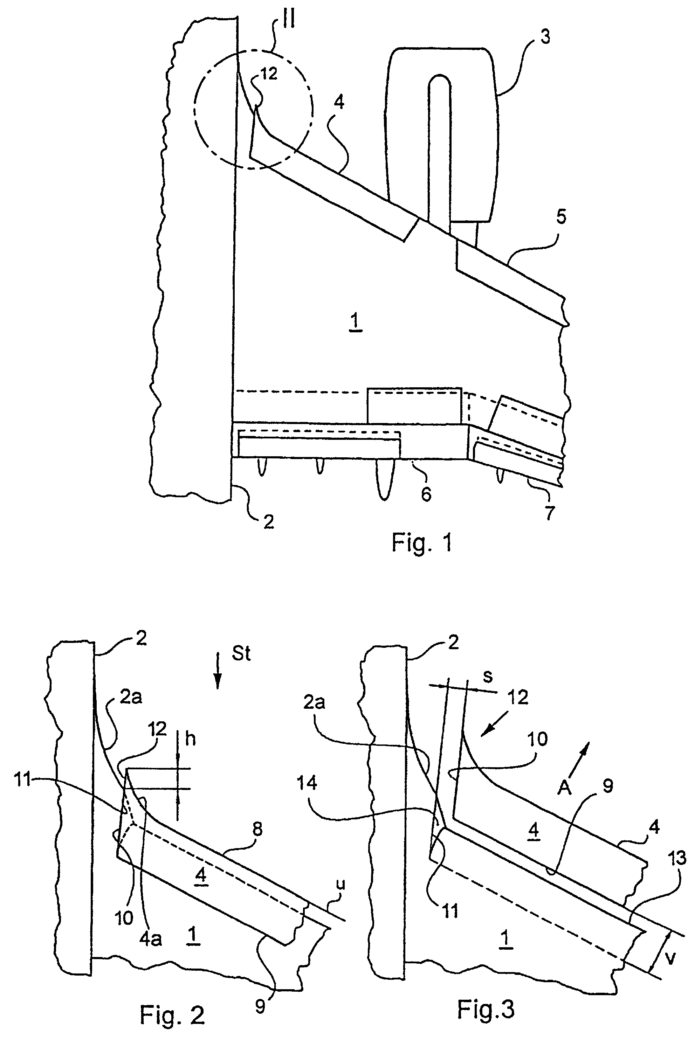

Figur 1 zeigt einen Flügel/Rumpf-Übergang mit dem Hauptflügel 1, dem Rumpf 2 und einem Triebwerk 3. Da im Bild nur die rechte Seite des Flugzeuges betrachtet wird, bilden die gezeigten Elemente mit den jeweils entsprechenden Elementen auf der nicht gezeigten linken Seite ein Paar. Der gezeigte rechte Hauptflügel 1 weist einen Vorflügel auf, der im Falle des dargestellten Beispiels infolge des Triebwerks 3 in einen inneren Vorflügel 4 und einen äußeren Vorflügel 5 unterteilt ist. Dabei ist am rumpfnahen Ende des Vorflügels 4 ein Wirbelgenerator 12 angeordnet. Die Hinterkante des Hauptflügels weist rechte Landeklappen 6 und 7 auf.

Figur 2 zeigt die Einzelheit II nach Fig.1 mit dem Hauptflügel 1, dem Rumpf 2 und dem Vorflügel 4 mit der Vorderkante 8 und der Hinterkante 9 sowie einer rumpfseitigen Abschlußkante 10, die an eine im Wurzelbereich des Hauptflügels 1 gelegene Trennstelle 11 angrenzt. Die Vorderkante 8 des Vorflügels 4 zeigt im wesentlichen den Verlauf einer geraden Umrißlinie u, die jedoch im Bereich des Flügel/Rumpf-Übergangs in einen Bogen 2a übergeht. In der Nähe der Abschlußkante 10 geht die Umrißlinie u in einen Bogen 4a über, der mit dieser eine Spitze eines hornförmigen Wirbelgenerators 12 bildet. Dadurch, daß der Bogen 4a stärker gekrümmt ist als der Bogen 2a, ergibt sich infolge der Trennstelle 11 ein stufenförmiger Übergang von der Höhe h, um die der Wirbelgenerator 12 den Bogen 2a überragt. Das Bild zeigt den Vorflügel 4 in eingefahrener Position. Diese Position nimmt der Vorflügel ein, wenn sich das Flugzeug in seiner Reiseflugkonfiguration befindet. In dieser Konfiguration verhält sich der Vorflügel 4 bezüglich des Luftwiderstandes praktisch wie jeder andere Vorflügel in eingefahrener Position.

Fig.3 zeigt den Vorflügel 4 in ausgefahrener Position. Diese ergibt sich, wenn der Vorflügel 4 in Richtung eines Pfeiles A um einen Vorschub v ausgefahren wird. Diese Bewegung erfolgt etwa senkrecht zur Vorderkante 13 des Hauptflügels 1 und weist damit eine vom Rumpf 2 weggerichtete Komponente auf. Daher entsteht zwischen der Abschlußkante 10 und der Trennstelle 11 ein Spalt von der Breite s. Das Ausfahren des Vorflügels 4 bewirkt zusammen mit den Landeklappen einerseits den typischen Anstieg des Auftriebes, andererseits wird dabei durch den Wirbelgenerator 12 ein in Flugrichtung gesehen rechtsdrehender Wirbel in die Wurzeiströmung eingeleitet, der sich im Langsamflug stabilisierend auf die Wurzelströmung des Flügels auswirkt. Beim Ausfahren eines Vorflügels entsteht immer an der rumpfseitigen Trennstelle zum inneren Ende des Vorflügels eine zur Wirbelbildung neigende aerodynamisch wirksame Geometrie, die jedoch im vorliegenden Falle nicht zur Unterstützung sondern zur Abschwächung des stabilisierenden Wirbels führt. Bei den Versuchen zur Optimierung dieser Lösung mit dem Wirbelerzeuger 12 hat sich wider Erwarten gezeigt, daß der besagte stabilisierende Wirbel um so kräftiger drehte, je wirksamer die störenden Einflüsse der rumpfseitigen Trennstelle 11 unterbunden werden konnten. Beste Ergebnisse wurden erzielt, wenn die rumpfseitige Trennstelle 11 mit einer geeigneten Verkleidung versehen wurde. Daher weist die rumpfseitige Trennstelle zum Vorflügel eine Übergangsverkleidung 14 auf. Diese bringt anstelle eines sprunghaften einen allmählichen geometrischen Übergang von der rumpfseitigen Trennstelle 11 zur Vorderkante 13 des Hauptflügels 1. Der durch den vorbeschriebenen Wirbelgenerator 12 bei ausgefahrenem Vorflügel im Zusammenwirken mit der Übergangsverkleidung 14 erzeugte stabilisierende Wirbel auf der Flügeloberseite verhindert eine frühzeitige Ablösung der Strömung in diesem kritischen Bereich. Die Übergangsverkleidung 14 weist eine starre Geometrie auf und ist fest mit der rumpfseitigen Schnittstelle verbunden ist.

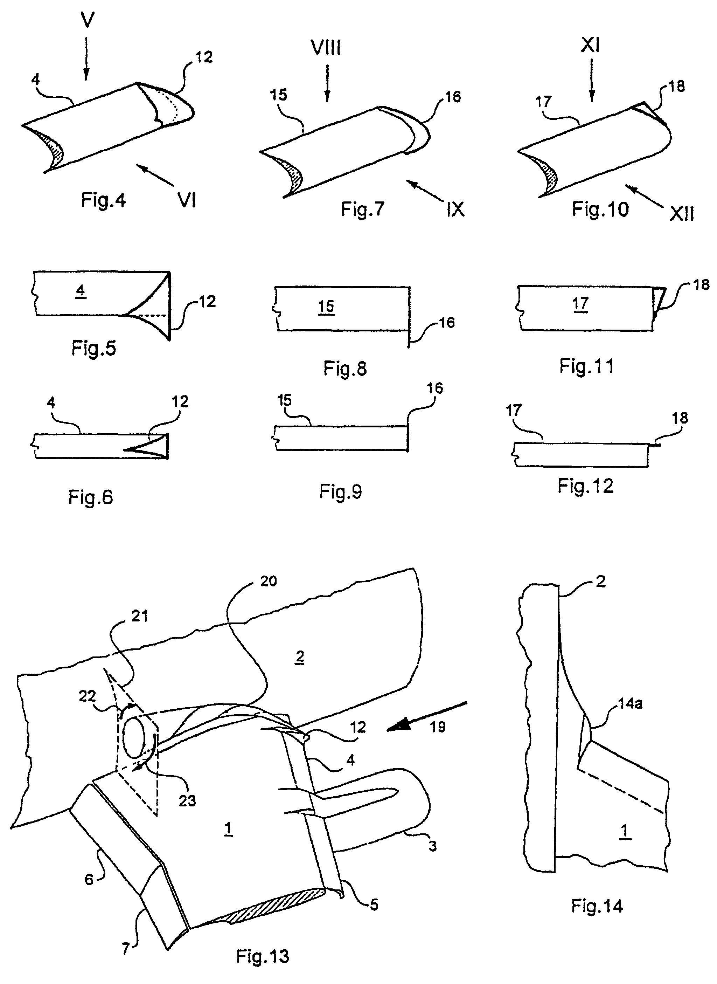

Die Figuren 4 bis 6 zeigen den Vorflügel 4 nach den Fign.1 bis 3 mit dem hornförmigen Wirbelgenerator 12. Dabei zeigt Fig.4 den Vorflügel 4 in perspektivischer Ansicht. Der Deutlichkeit halber ist nur der rumpfnahe Teil des Vorflügels 4 mit dem Wirbelgenerator 12 dargestellt. In Fig.5 erscheint der Vorflügel 4 in der Daufsicht und in Fig.6 in der Vorderansicht.

Die Figuren 7 bis 9 zeigen einen anderen Vorflügel 15 mit einer weiteren Ausgestaltung in Form eines scheibenförmigen Wirbelgenerators 16. Dabei zeigt Fig.8 den Vorflügel 15 wieder in der Draufsicht und Fig.9 in der Vorderansicht.

Die Figuren 10 bis 12 zeigen schließlich einen Vorflügel 17 mit einem Wirbelgenerator 18, der die Form eines Zusatzflügels aufweist. Dieser flügelförmige Wirbelgenerator 18 ist an das rumpfseitige Ende des Vorflügels 17 angesetzt.

Aus den gezeigten Darstellungen, jeweils bestehend aus pespektivischer Ansicht, Draufsicht und Vorderansicht, sind die geometrischen Gestaltungsprinzipien der einzelnen Wirbelgeneratoren 12,16 und 18 entnehmbar. Diese Wirbelgeneratoren 12,16,18 sind keine Zusatzklappen und weisen keine beweglichen Teile auf. Dennoch stellen sie im Zusammenwirken mit den Übergangsverkleidungen 14 ein sehr wirksames Mittel zur Beeinflussung der Wurzelströmung an einem Flugzeug dar.

Figur 13 zeigt die rechte Flügelwurzel eines Flugzeuges mit dem Hauptflügel 1, dem Rumpf 2, dem Triebwerk 3, den Vorflügeln 4 und 5, den Landeklappen 6 und 7 und dem Wirbelgenerator 12. Dabei sind die Vorflügel 4 und 5, beispielsweise für einen Landeanflug, ausgefahren. Die hierbei wirksame Anströmung 19 ist durch einen Pfeil dargestellt. In dieser Stellung der Vorflügel wird durch den am inneren Ende des Vorflügels 4 angeordneten Wirbelgenerator 12 im Zusammenwirken mit der betreffenden Übergangsverkleidung 14 stromab über dem ablösegefährdeten Gebiet eine Wirbelströmung erzeugt bzw. eine bestehende Wirbelströmung verstärkt. Die so erzeugte Wirbelströmung hat die Form eines Tütenwirbels 20. Projiziert man die Geschwindigkeitsvektoren dieses Wirbels 20 in eine senkrecht zur Anströmung 19 orientierte Ebene 21, so erhält man eine durch zwei Pfeile 22,23 dargestellte in Flugrichtung gesehen rechtsdrehende Rotationsströmung. Diese richtet die Hauptströmung auf die Flügelwurzel hin aus und stabilisiert damit die Strömung auf der Oberseite des Flügels, so daß auch bei großen Anstellwinkeln keine Ablösung der Strömung eintritt. Ohne die erfindungsgemäße Einrichtung würde die besagte Strömung schon bei relativ kleinen Anstellwinkeln ablösen, was zu einem Zusammenbruch des Auftriebes und einem Anstieg des Luftwiderstandes führen würde. Zur Herstellung des Wirbelgenerators 12 und der Übergangsverkleidung 14 kommen alle fachüblichen Materialien in Betracht.

Gemäß einer weiteren Ausgestaltung der Erfindung ist vorgesehen, daß die Übergangsverkleidung eine variable Geometrie aufweist.

Fig.14 zeigt daher den Bereich der Flügelwurzel nach Fig.3 mit dem Hauptflügel 1 und dem Rumpf 2 ohne den Vorflügel, wobei eine Übergangsverkleidung 14a gezeigt ist, die eine gerundete Kontur aufweist. Diese Übergangsverkleidung 14a besteht aus einem gummielastischen Material mit einem Hohlraum, in den bei ausgefahrenem Vorflügel ein unter Druck stehendes Medium eingeleitet wird. Hierdurch erhält die Übergangsverkleidung 14a die dargestellte abgerundete Form, wodurch der störende Einfluß der rumpfseitigen Schnittstelle auf die Wurzelströmung weiter reduziert wird. Durch eine nicht gezeigte Einrichtung wird sichergestellt, daß die Zu- und Abschaltung des Druckmediums, beispielsweise Druckluft, nur im Zusammenwirken mit der Betätigung des Vorflügels erfolgt.

## Patentansprüche

1. Tragflügelpaar eines Flugzeuges mit einem rechten und einem linken Tragflügel mit einem Hochauftriebssystem mit mindestens einem Paar von Vorflügeln, wobei jeder Vorflügel mit seinem rumpfnahen Ende an eine im Wurzelbereich des jeweiligen Tragflügels gelegene rumpfseitige Trennstelle angrenzt, und mit einer Einrichtung zur Beeinflussung einer Wurzelströmung an der Flügelwurzel
**dadurch gekennzeichnet, daß** an den jeweiligen rumpfnahen Enden der Vorflügel (4) je ein Wirbelgenerator (12,16,18) angeordnet ist und die rumpfseitigen Trennstellen (11) zu den Vorflügeln jeweils eine Übergangsverkleidung (14,14a) aufweisen.

2. Tragflügelpaar nach Anspruch 1,
**dadurch gekennzeichnet, daß** der Wirbelgenerator (12) hornförmig ausgebildet ist.

3. Tragflügelpaar nach Anspruch 1,
**dadurch gekennzeichnet, daß** der Wirbelgenerator (16) scheibenförmig ausgebildet ist.

4. Tragflügelpaar nach Anspruch 1,
**dadurch gekennzeichnet, daß** der Wirbelgenerator (18) flügelförmig ausgebildet ist.

5. Tragflügelpaar nach einem der Ansprüche 1 bis 4,
**dadurch gekennzeichnet, daß** die Übergangsverkleidung (14a) eine variable Geometrie aufweist.

6. Tragflügelpaar nach Anspruch 5,
**dadurch gekennzeichnet, daß** die Übergangsverkleidung (14a) aus einem gummielastischen Material besteht und einen Hohlraum zur Einleitung eines Druckmediums aufweist.

## Claims

1. A pair of aircraft wings with a right-hand and a lefthand wing with a high-lift system with at least one pair of leading edge slats, each leading edge slat bordering with its inboard end a separation edge located on the fuselage in the root area of the respective wing, and with a device for influencing the airflow over the wing root, **characterised in that** a vortex generator (12, 16, 18) is in each case arranged at the inboard end of the respective leading edge slat (4) and the separation edge (11) between the fuselage and leading edge slat has in each case a transition fairing (14, 14a) on the fuselage side.

2. A pair of aircraft wings according to Claim 1, **characterised in that** the vortex generator (12) is in the shape of a horn.

3. A pair of aircraft wings according to Claim 1, **characterised in that** the vortex generator (16) is in the shape of a disc.

4. A pair of aircraft wings according to Claim 1, **characterised in that** the vortex generator (18) is in the shape of a winglet.

5. A pair of aircraft wings according to one of claims 1 to 4, **characterised in that** the transition fairing (14a) has a variable geometry.

6. A pair of aircraft wings according to Claim 5, **characterised in that** the transition fairing (14a) consists of a rubber elastic material and has a cavity for receiving a pressurised medium.

## Revendications

1. Dispositif à paire d'ailes porteuses pour influencer l'écoulement d'air autour de l'emplanture d'aile d'un aéronef, constitué d'une aile porteuse gauche et d'une aile porteuse droite, d'un système de propulsion verticale, d'au moins une paire de pré-ailes, chaque pré-aile jouxtant avec son extrémité proche de la carlingue un point de sectionnement situé du côté de la carlingue, dans la zone de l'emplanture de chaque aile porteuse, **caractérisé en ce que** un générateur de turbulences (12, 16, 18) est disposé contre chaque extrémité des pré-ailes proches de la carlingue et **en ce que** les points de sectionnement (11) des pré-ailes situés du côté de la carlingue présentent chacun un revêtement intermédiaire (14, 14a).

2. Paire d'ailes porteuses selon la revendication 1, **caractérisée en ce que** le générateur de turbulences (12) est en forme de corne.

3. Paire d'ailes porteuses selon la revendication 1, **caractérisée en ce que** le générateur de turbulences (16) est en forme de disque.

4. Paire d'ailes porteuses selon la revendication 1, **caractérisée en ce que** le générateur de turbulences (18) est en forme d'aile.

5. Paire d'ailes porteuses selon les revendications 1 à 4, **caractérisée en ce que** le revêtement intermédiaire (14a) présente une géométrie variable.

6. Paire d'ailes porteuses selon la revendication 5, **caractérisée en ce que** le revêtement intermédiaire (14a) est constitué d'un matériau caoutchouteux et présente un espace creux destiné à recevoir un moyen de pression.
